Europäisches Patentamt

(19) European Patent Office

Office européen des brevets

(11) Numéro de publication: **0 104 976**
**B1**

(12) **FASCICULE DE BREVET EUROPEEN**

(45) Date de publication du fascicule du brevet: 11.06.86

(21) Numéro de dépôt: 83401717.0

(22) Date de dépôt: 29.08.83

(51) Int. Cl.⁴: **C 03 C 17/23, C 04 B 41/85**

(54) Procédé de formation d'une couche d'oxydes métalliques sur un objet.

(30) Priorité: 02.09.82 JP 153067/82

(43) Date de publication de la demande: 04.04.84 Bulletin 84/14

(45) Mention de la délivrance du brevet: 11.06.86 Bulletin 86/24

(84) Etats contractants désignés:
BE DE FR GB IT LU NL SE

(56) Documents cités:
**CH - A - 375 109**
**FR - A - 1 555 348**

(73) Titulaire: **SAINT-GOBAIN VITRAGE, Les Miroirs 18, avenue d'Alsace, F-92400 Courbevoie (FR)**

(72) Inventeur: **Kawahara, Hideo, 8-3-205 Minami Sakurazuka 2-chome, Toyonaka-shi Osaka-fu (JP)**
Inventeur: **Kato, Yukihiro, 2, 1-403, Nigawa-cho, Nishinomiya-shi Hyogo-ken (JP)**

(74) Mandataire: **Breton, Jean-Claude et al, SAINT-GOBAIN RECHERCHE 39, quai Lucien Lefranc, F-93300 Aubervilliers Cedex (FR)**

LIBER, STOCKHOLM 1986

## Description

La présente invention concerne un procédé de formation d'une couche d'oxydes métalliques sur un objet. Plus précisément elle porte sur un procédé de formation d'une couche d'oxydes métalliques par la mise en contact d'une poudre de composés organo-métalliques avec la surface d'un objet chauffée à une haute température.

Depuis longtemps, on dépose une couche d'oxydes métalliques sur la surface du verre. Aujourd'hui des verres revêtus d'une couche d'oxydes de Fe, Cr, Co, Ti, Al, Sn, Cu, etc. sont utilisés comme verres réfléchissant des rayons calorifiques afin d'intercepter la chaleur solaire. Par ailleurs, de telles couches d'oxydes sont utilisées pour augmenter la dureté de la surface de récipients divers, de bouteilles, etc. ou pour décorer la surface de ces dernières.

Le procédé de dépôt d'une couche d'oxydes métalliques sur la surface du verre, consiste en général à pulvériser une solution de composés organo-métalliques sur le verre chauffé à une haute température. Toutefois ce procédé présente quelques inconvénients : ainsi, on constate, par exemple que l'épaisseur des couches d'oxydes métalliques déposées sur la surface du verre est parfois irrégulière; par ailleurs, la solution pulvérisée refroidissant rapidement la surface de l'objet en verre, ce dernier peut se fissurer si la paroi est mince; enfin la solution contient un solvant qui peut s'enflammer au contact du verre chaud.

Pour éviter ces inconvénients, depuis ces dernières années, on utilise un procédé qui consiste à projeter une poudre de composés organo-métalliques en suspension dans l'air.

Ce dernier procédé appliqué au verre plat, est mis en oeuvre par un dispositif décrit dans le brevet européen publié sous le numéro EP 0 006 064. Ce dispositif est une buse qui couvre toute la largeur de la feuille de verre et, qui comprend essentiellement une fente d'évacuation à l'extrémité d'un ensemble de divergent et convergent, lui même précédé par une chambre d'homogénéisation alimentée d'une parten poudre en suspension dans un courant gazeux primaire, par une pluralité de conduits élémentaires et d'autre part en gaz sous pression destiné à être mélangé avec la poudre en suspension dans son courant gazeux primaire. La feuille de verre, portée à la température requise, défile sous ladite buse. Par rapport au procédé préconisant la pulvérisation d'une solution le procédé qui consiste à déposer une poudre, présente les avantages suivants :

. la surface du verre est moins refroidie;

. le taux d'utilisation des composés organo-métalliques est plus élevé;

. l'absence de solvant supprime les risques d'inflammation.

Toutefois, ce procédé ne permet pas d'obtenir une couche d'épaisseur rigoureusement constante, lorsqu'on augmente de façon importante la largeur de la couche à déposer ou bien, lorsqu'on réduit le débit de gaz vecteur pour diminuer le refroidissement du verre afin d'obtenir un meilleur taux de décomposition thermique des composés organo-métalliques. Cet inconvénient, inhérent au procédé, vient du fait que la poudre de composés organo-métalliques adhère aux parois du dispositif et que, parfois, des petits agglomérés de poudre se détachent et tombent sur la surface du verre.

A signaler également que les couches d'oxydes métalliques obtenues selon ce procédé, présentent une faible résistance chimique.

La présente invention a pour but d'obvier aux inconvénients precités.

L'objet de cette invention est un procédé de formation d'une couche d'oxydes métalliques sur un objet selon lequel on décompose thermiquement un mélange pulvérulent réparti sur la surface dudit objet, porté préalablement à la température requise, qui consiste à employer un mélange formé d'une poudre principalement composée d'oxyde de titane et d'une poudre de composés organo-métalliques.

Selon l'invention on peut utiliser une poudre à base d'oxyde de titane dont la granulométrie est comprise entre 7 nanomètres et 10 microns. De préférence la poudre à base d'oxyde de titane utilisée possédera une granulométrie correspondant à environ 1/1000 de la granulométrie moyenne de la poudre de composés organo-métalliques. Par exemple, lorsque la poudre de composés organo-métalliques a une granulométrie moyenne de 1 à 40 microns, on utilise une poudre ayant la granulométrie moyenne d'environ 7 à 40 nanomètres.

Ainsi, on peut utiliser un produit vendu sous la dénomination "Titanium oxide P25" (nom commercial de la société "NIPPON AEROSIL") dont la teneur en oxyde de titane est supérieure à 99,5 % en poids et dont la granulométrie moyenne est de 20 nanomètres. En plus, selon cette invention, la trés fine poudre principalement composée d'oxyde de titane, à ajouter et à mélanger, est utilisée à une dose de 0,5 à10 % du poids du mélange pulvérulent.

De plus, selon cette invention, comme poudre de composés organo-métalliques, il est préférable d'utiliser une poudre de composés d'étain, particulièrement celle d'oxyde de dibutyl étain.

Ainsi, on peut améliorer la fluidité de la poudre de composés organo-métalliques grâce à l'adjonction de la trés fine poudre principalement composée d'oxyde de titane, et éviter l'adhésion ou l'agglomeration de la poudre sur la paroi des tuyauteries ou des buses etc. et également augmenter la résistance des couches d'oxydes métalliques déposées sur la surface du verre, notamment aux agents chimiques.

Selon cette invention il est efficace d'utiliser la trés fine poudre principalement composée d'oxyde de titane dont la teneur en oxyde de titane soit supérieure à 90 % en poids, de préférence, supérieure à 98 % en poids.

Les avantages du procédé selon l'invention sont les plus marqués lorsque la très fine poudre à base d'oxyde de titane est introduite à raison de 0,5 à 10 % en poids dans le mélange pulvérulent.

Lorsque la teneur en poudre principalement composée d'oxyde de titane est inférieure à 0,5 % en poids, la fluidité du mélange pulvérulent diminue. En revanche, quand cette teneur est supérieure à 10 % en poids, les performances optiques des couches d'oxydes métalliques déposées sur la surface du verre se dégradent, à savoir que le taux de réflexion du rayonnement visible diminue et que lesdites couches deviennent de plus en plus troubles, et, la conductivité électrique de ces couches d'oxydes métalliques diminue. De plus, selon l'invention, on peut fabriquer des plaques revêtues d'une couche d'oxydes métalliques ayant une excellente performance électrique et/ou optique lorsqu'on utilise comme composés organo-métalliques des composés d'etain, particulièrement l'oxyde de dibutyl étain (DBTO).

Les avantages de l'invention seront mieux perçus au travers des exemples suivants et des figures jointes qui représentent:
- figure 1 : un schéma du dispositif permettant de mesurer la capacité d'adhésion d'une poudre;
- figure 2 : une courbe montrant la variation d'adhésion d'une poudre en fonction de la quantité d'oxyde de titane ajoutée;
- figure 3 : une courbe montrant la variation de résistance électrique de la couche en fonction de la quantité d'oxyde de titane ajoutée.

On a séché de l'oxyde de dibutyl étain (DBTO) dans un séchoir à air chaud recyclé jusqu'à amener sa teneur en eau à 0,5 %. Ensuite, on a écrasé cet oxyde de dibutyl étain au moyen d'un broyeur pour ajuster sa granulométrie entre 3 et 30 micromètres, avec une moyenne de 11 micromètres.

Après cela, on a divisé cette poudre en 8 portions égales, auxquelles on a ajouté une très fine poudre de 20 nanomètres de granulométrie contenant au moins 99,8 % en poids d'oxyde de titane ($TiO_2$) (dénomination commerciale "Titanium Oxide P25" de la société " NIPPON AEROSIL") de façon à ce que pour les 8 échantillons le rapport pondéral de mélange ($TiO_2$ sur DBTO) soit respectivement de 0, 0,5, 1, 2, 3, 5, 10 et 15 %. On a ensuite mélangé chaque échantillon pendant 30 minutes.

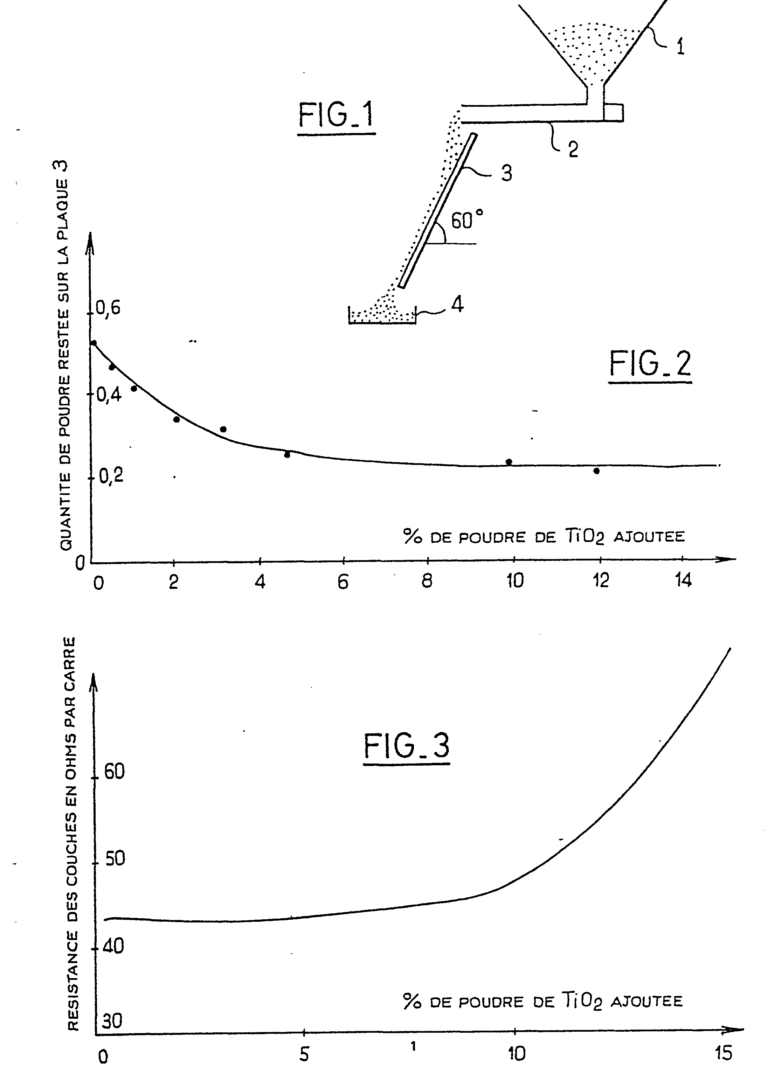

Après cela, on a chargé un dispositif d'essai montré à la figure 1, pour mesurer la capacité d'adhésion de la poudre successivement avec ces 8 types de mélanges.

Ce dispositif d'essai comporte une trémie 1 munie à son extrémité inférieure d'un système de distribution 2 par vis sans fin, une plaque 3 de fer inclinée à 60° par rapport à l'horizontal et disposée sous la sortie de la vis sans fin, un récipient 4 de récupération de la poudre au bas de la plaque 3.

Comme montré sur la figure 1, on a versé 10 gr de poudre de chaque type de mélanges dans la trémie 1 et distribué la poudre à un debit constant sur la plaque 3. On a récupéré la poudre tombée de cette plaque 3 dans le récipient 4, puis pesé la poudre récupérée. La différence entre les 10 gr fournis dans la trémie 1 au départ et la quantité récupérée a été considérée comme une représentation de la capacite de la poudre à adhérer dans la trémie et sur la plaque 3, ou comme indication de la coulabilité de ladite poudre. On constate que la coulabilité s'améliore avec la quantité de poudre de $TiO_2$ ajoutée. Cependant, au delà de 10 % de poudre de TiO2 il n'y a pas d'amélioration supplémentaire.

Ainsi on a mesuré la capacité d'adhesion des 8 types de poudres mélangées et reporté les resultats obtenus à la figure 2, où la quantité de poudre restée sur la plaque 3 est en ordonnée et la proportion de $TiO_2$ ajoutée en abscisse.

En plus, pour mesurer la résistance aux agents chimiques de couches obtenues à partir de ces poudres, respectivement mélangées avec une dose en oxyde de titane de 0, 0,5, 1, 3, 5, 10, 12 et 15 % en poids, on a projeté les 8 poudres différentes précitées sur la surface de plaques de verre portées à une température de 575 à 580°C au moyen d'un pistolet de sablage. Le pistolet était alimenté en air sous pression avec un appoint d'acide fluorhydrique gazeux tel que le rapport molaire fluor/étain soit égal à 2.

Le débit de DBTO était de 12 g/min.

On a projeté chacune des 8 poudres différentes précitées pendant 2 secondes sur chacune des plaques de verre d'une épaisseur de 5 mm et d'une taille de 150 x 150 mm, avec un débit d'air de 100 litres/min sous une pression d'air de 4 kg/cm². Ensuite, on a coupé les 8 plaques ainsi obtenues, en des échantillons d'une taille de 50 x 25 mm et utilisé ceux-ci pour des mesures de résistance à l'attaque par NCI à 1N et par NaOH à 1N.

La résistance de l'acide et celle à la soude sont exprimées en nombre de jours comptés jusqu'au moment où on a pu observer à l'oeil nu des trous d'épingle, des décolorations, des défauts ou un décollement de la couche des échantillons trempés respectivement dans les solutions acide et basique maintenues à 20°C. Les résultats obtenus sont indiques au tableau 1, disposé en fin de description.

Comme il apparaît sur le tableau 1 et la figure 2, où les resultats ont été portés, l'adjonction d'oxyde de titane à la poudre de composés organo-métalliques améliore la coulabilité de celle-ci et la résistance aux agents chimiques des couches d'oxydes métalliques obtenues sur la surface du verre à partir de cette poudre. Les améliorations sont d'autant plus importantes que la proportion de $TiO_2$ ajoutée est plus forte et cela jusqu'à environ 10 % de $TiO_2$; au delà de cette proportion il n'y a plus d'amélioration sensible pour ce qui concerne la coulabilité et la résistance de la couche à l'acide, la résistance de la couche à la soude décroissant même légérement.

Par ailleurs, on a mesuré la résistance électrique superficielle de la couche de 8 plaques identiques à celles soumises aux épreuves de résistance aux agents chimiques et reporté les résultats obtenus sur la figure 3.

D'après la figure 3, on constate que la résistance électrique des couches mesurée en ohms par carré est resté faible lorsqu'on a ajouté de l'oxyde de titane et que cette amélioration n'est notable que pour des proportions d'oxyde de titane ajoutées inférieures à 10 %; ensuite, au delà d'une proportion de 10 % d'oxyde de titane, la resistance croit rapidement.

**TABLEAU 1**

| (%) d'oxyde titane ($TiO_2$) dans la poudre | nombre d'échantillons | Endurance en nombre d'heures H et de jours J | |
|---|---|---|---|
| | | résistance à l'acide (moyenne) | résistance à la soude (moyenne) |
| 0 | 5 | 4 - 12 H (8 H) | 5 - 9 J (8 J) |
| 0,5 | 5 | 6 - 18 H (12 H) | 6 - 11 J (9 J) |
| 1 | 5 | 1 - .2 J (2 J) | 9 - 12 J (10 J) |
| 3 | 5 | 3 - 5 J (5 J) | 14 - 27 J (22 J) |
| 5 | 5 | 9 - 11 J (10 J) | 11 - 27 J (20 J) |
| 10 | 5 | 7 - 13 J (9 J) | 12 - 25 J (20 J) |
| 12 | 5 | 8 - 14 J (10 J) | 11 - 25 J (20 J) |
| 15 | 5 | 9 - 14 J (11 J) | 11 - 23 J (19 J) |

## Revendications

1. Procédé de formation d'une couche d'oxydes métalliques sur un objet selon lequel on distribue une poudre décomposable thermiquement sur la surface dudit objet porté à température élevée, caractérisé en ce que la poudre est constituée d'un mélange d'une poudre à base d'oxyde de titane et d'une poudre de composés organo-métalliques.

2. Procédé de formation d'une couche d'oxydes métalliques sur un objet selon la revendication 1, caractérisé en ce que ledit objet est en verre ou céramique.

3. Procédé de formation d'une couche d'oxydes métalliques sur un objet selon l'une des revendications précédentes caractérisé en ce que la granulométrie de la poudre à base d'oxyde de titane est de l'ordre du 1/1000 de celle de la poudre à laquelle elle est ajoutée.

4. Procédé de formation d'une couche d'oxydes métalliques sur un objet selon l'une des revendications 1 à 3, caractérisé en ce que la granulométrie de l'oxyde de titane est comprise entre 7 nanomètres et 10 micromètres.

5. Procédé de formation d'une couche d'oxydes métalliques sur un objet selon l'une des revendications précédentes, caractérisé en ce que l'oxyde de titane pulvérulent est ajouté à la poudre de composés organo-métalliques à un taux compris entre 0,5 à 10 % en poids par rapport au poids du mélange pulvérule.

6. Procédé de formation d'une couche d'oxydes métalliques sur un objet, selon l'une des revendications précédentes, caractérisé en ce que les composés organo-métalliques précités sont des composés organiques d'étain.

7. Procédé de formation d'une couche d'oxydes métalliques sur un objet, selon la revendication 6, caractérisé en ce que les composés organo-métalliques précités sont de l'oxyde de dibutylétain.

## Patentansprüche

1. Verfahren zur Bildung einer Metalloxidschicht auf einem Gegenstand, bei welchem ein thermisch zersetzbares Pulver auf der Fläche des auf eine erhöhte Temperatur gebrachten Gegenstands verteilt wird,
dadurch gekennzeichnet,
daß das Pulver aus einem Gemisch eines Pulvers auf Titanoxidbasis und eines Pulvers aus metallorganischen Verbindungen gebildet ist.

2. Verfahren zur Bildung einer Metalloxidschicht auf einem Gegenstand nach Patentanspruch 1,
dadurch gekennzeichnet,
daß der Gegenstand aus Glas oder Keramik besteht.

3. Verfahren zur Bildung einer Metalloxidschicht auf einem Gegenstand nach einem der vorhergehenden Ansprüche,
dadurch gekennzeichnet,
daß die Korngröße des Pulvers auf der Basis von Titanoxid in der Größe von 1/1000 von der des Pulvers beträgt, dem es beigegeben wird.

4. Verfahren zur Bildung einer Metalloxidschicht auf einem Gegenstand nach einem der Ansprüche 1 bis 3,
dadurch gekennzeichnet,
daß die Korngröße von Titanoxid zwischen 7 Nanometer und 10 Micrometer beträgt.

5. Verfahren zur Bildung einer Metalloxidschicht auf einem Gegenstand nach einem der vorhergehenden Ansprüche,
dadurch gekennzeichnet, daß das pulverisierte Titanoxid dem Pulver aus metallorganischen Verbindungen in einem Prozentsatz zwischen 0,5 bis 10 Gewichtsprozent bezogen auf das Gewicht des pulverisierten Gemisches zugegeben wird.

6. Verfahren zur Bildung einer Metalloxidschicht auf einem Gegenstand nach einem der vorhergehenden Ansprüche,
dadurch gekennzeichnet, daß die metallorganischen Verbindungen organische Zinnverbindungen sind.

7. Verfahren zur Bildung einer Metalloxidschicht auf einem Gegenstand nach Patentanspruch 6,
dadurch gekennzeichnet, daß die metallorganischen Verbindungen aus Zinndibutyloxid bestehen.

## Claims

1. Method of forming a layer of metallic oxides on an object, in which a powder which is decomposable on heating is distributed on the surface of the object which is at an elevated temperature, characterised in that the powder comprises a mixture of a powder comprising titanium oxide and a powder comprising an organometallic compound.

2. Method of forming a layer of metallic oxides on an object according to claim 1, characterised in that said object is of glass or a ceramic material.

3. Method of forming a layer of metallic oxides on an object according to one of the preceding claims, characterised in that the grain size of the powder based on titanium oxide is of the order of 1/1000 of that of the powder to which it is added.

4. Method of forming a layer of metallic oxides on an object according to any one of claims 1 to 3, characterised in that the grain size of the titanium oxide is from 7 nanometres to 10 micrometres.

5. Method of forming a layer of metallic oxides on an object according to any one of the preceding claims, characterised in that the pulverulent titanium oxide is added to the powder of organometallic compound in an amount from 0.5 to 10% by weight of the weight of organometallic compound.

6. Method of forming a layer of metallic oxides on an object according to any one of the preceding claims, characterised in that said organometallic compound is an organic compound of tin.

7. Method of forming a layer of metallic oxides on an object, according to claim 6, in which said organometallic compound is dibutyltin oxide.

FIG_1

FIG_2

FIG_3